# EUROPÄISCHE PATENTSCHRIFT

(11) **EP 2 292 415 B1**
(45) Veröffentlichungstag und Bekanntmachung des Hinweises auf die Patenterteilung: **06.08.2014**
(21) Anmeldenummer: 10008698.2
(22) Anmeldetag: 20.08.2010
(51) Int. Cl.: B29C 70/44, B29C 70/54, B29D 99/00, B64C 1/12, B64C 1/00, B29C 33/76, B64C 1/06, B29L 31/30

(54) **Verfahren zur Herstellung eines zumindest ein Hohlprofil aufweisenden Bauteils und Hohlkörper zur Durchführung dieses Verfahrens**
Method for producing a component with at least one hollow profile and hollow body for carrying out this method
Procédé de fabrication d'un composant comprenant au moins un profilé creux et corps creux destiné à l'exécution du procédé

(30) Priorität: 08.09.2009 DE 102009040528
(43) Veröffentlichungstag der Anmeldung: 09.03.2011
(73) Patentinhaber: Premium AEROTEC GmbH, 86179 Augsburg (DE)
(72) Erfinder: Gensewich, Christian, 26954 Nordenham (DE); Tümena, Christian, 28816 Stuhr (DE)
(74) Vertreter: Avenhaus, Beate

(56) Entgegenhaltungen:
- EP-A1- 1 762 355
- EP-A1- 2 008 796
- WO-A2-2008/133748
- US-B1- 6 458 309

## Beschreibung

### TECHNISCHES GEBIET

Die vorliegende Erfindung betrifft ein Verfahren zur Herstellung eines zumindest ein Hohlprofil aufweisenden Bauteils gemäß dem Oberbegriff des Patentanspruchs 1. Sie betrifft weiterhin einen Hohlkörper als Formteil zur Durchführung dieses Verfahrens gemäß dem Oberbegriff des Anspruchs 6.

### STAND DER TECHNIK

Bei der Herstellung von Bauteilen aus laminierten Faserverbundwerkstoffen, insbesondere Kohlefaserverbundwerkstoff, werden einzelne Bauteilelemente unter Druck- und vorzugsweise auch unter Wärmeeinwirkung zusammengefügt. Bei diesem Prozess werden die Bauteilelemente in einer unstarren und fluiddichten Umhüllung untergebracht, die ihrerseits einem Unterdruck ausgesetzt wird. Auf diese Weise werden beim Zusammenfügen der Bauteilelemente eventuell im Laminat vorhandene Luftblasen entfernt, wobei gleichzeitig durch den von außen ausgeübten Druck die Bauteileelemente fest zusammengefügt werden.

Bilden die zusammenzufügenden Bauteilelemente zwischen sich ein Hohlprofil aus, so wird üblicherweise vor dem Zusammenfügen der Bauteilelemente ein als Schlauch ausgebildeter Hohlkörper in die später das Innere des Hohlprofils bildende Vertiefung eingelegt, wobei dieser Schlauch eine Fluidverbindung aufweist, die aus der später unter Unterdruck stehenden fluiddichten Umhüllung herausführt und mit der äußeren Umgebung in Fluidverbindung steht. Dadurch wird der von außen auf die Bauteilelemente einwirkende Umgebungsdruck auch in das Innere des auszubildenden Hohlprofils geleitet, sodass dieses Hohlprofil während des Fertigungsprozesses nicht kollabiert.

Bei den bislang als Hohlkörper verwendeten Schläuchen besteht die Gefahr, dass bei nicht runden Hohlprofilen, beispielsweise bei trapezförmigen Hohlprofilen, der Schlauch im Bereich der Querschnittsecken überdehnt wird und unter Einwirkung der Druckdifferenz zwischen dem im Inneren der fluiddichten Umhüllung herrschenden Unterdruck und dem von außen aufgebrachten Überdruck platzt.

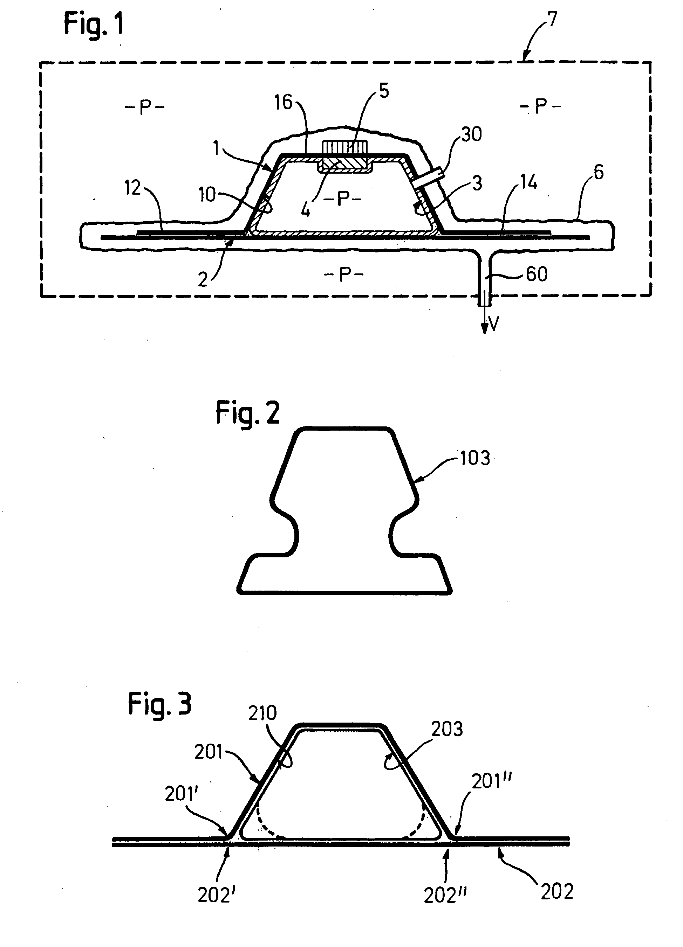

Diese Situation ist in Fig. 3 dargestellt, wo ein mit einer Vertiefung 210 versehenes erstes Bauteilelement 201 und ein zweites Bauteilelement 202 so zusammengefügt sind, dass die Vertiefung 210 zusammen mit dem zweiten Bauteilelement 202 ein Hohlprofil ausbildet. In das Innere der Vertiefung 210 und damit in das Innere des gebildeten Hohlprofils ist ein von einem Schlauch von üblicherweise rundem Querschnitt gebildeter Hohlkörper 203 eingelegt. Dieser Schlauch nimmt im Bereich der unteren Ecken des von der Vertiefung 210 gebildeten Hohlprofils üblicherweise die gestrichelt gezeichnete Lage ein. Wird der Schlauch unter Druck gesetzt, so nimmt er die mit durchgezogenen Linien gezeigte Querschnittsgestalt ein, wobei die Wandung des Schlauchs 203 in diesem Bereich um ein Vielfaches, beispielsweise um 300 %, überdehnt wird. Dadurch nimmt die Wandstärke ab und die Gefahr des Platzens des schlauchartigen Hohlkörpers 203 steigt.

Des Weiteren ist zu sehen, dass der Schlauch trotz starker Überdehnung nicht vollständig bis in die Ecken eindringen kann, sodass in den mit 202' und 202" bezeichneten Bereichen des zweiten laminierten Bauteilelements 202 und in den diesen gegenüber gelegenen Bereichen 201' und 201" des ersten Bauteilelements 201 kein Druck auf die frisch laminierte Wandung der beiden Bauteilelemente 201, 202 ausgeübt werden kann. Dies kann zu einer Wellenbildung der einzelnen Laminatschichten im jeweiligen Bauteilelement 201, 202 in diesen Bereichen führen. Die Festigkeit des jeweiligen Bauteilelements 201, 202 ist in diesen Bereichen daher möglicherweise geschwächt.

Zwar ist es bekannt, die Wandstärken der das Hohlprofil bildenden Wandung zu erhöhen, um so ein Kollabieren zu verhindern oder in das Hohlprofil Kerne mit Vollquerschnitt, also nicht als Hohlkörper, einzulegen, doch sorgen diese beiden Vorgehensweisen für ein erhöhtes Gewicht des fertigen Bauteils, was insbesondere im Flugzeugbau unerwünscht ist.

WO 2008/133748 offenbart ein Verfahren gemäß dem Oberbegriff des Anspruchs 1.

EP 1 762 355 A1 offenbart einen Hohlkörper gemäß dem Oberbegriff des Anspruchs 6.

### DARSTELLUNG DER ERFINDUNG

Aufgabe der vorliegenden Erfindung ist es daher, ein gattungsgemäßes Verfahren anzugeben, das auf zuverlässige Weise ein Kollabieren eines Hohlprofils während der Fertigung verhindert und die Ausschussrate des Fertigungsprozesses senkt. Des Weiteren ist es Aufgabe der vorliegenden Erfindung, einen für die Durchführung eines solchen Verfahrens geeigneten Hohlkörper anzugeben.

Der das Verfahren betreffende Teil der Aufgabe wird durch das im Patentanspruch 1 angegebene Verfahren gelöst.

### VORTEILE

Das Verwenden des als Formteil ausgebildeten Hohlkörpers mit einem dem zu bildenden Hohlprofil angenäherten Querschnitt sorgt dafür, dass aufgrund der Druckdifferenz zwischen dem innerhalb der fluiddichten Umhüllung anliegenden Unterdruck und dem von außen einwirkenden Überdruck keine oder nur eine unwesentliche Überdehnung des Wandmaterials des Hohlkörpers stattfindet. Dadurch ist das Risiko des Reißens der Hohlkörperwandung gegenüber dem Stand der Technik deutlich herabgesetzt. Zudem kann der als Formteil ausgebildete Hohlkörper weiter als beim Stand der Technik in die Ecken des Querschnitts eindringen und auch dort einen von innen wirkenden Druck auf das Wandmaterial des ersten und zweiten laminierten Bauteilelements ausüben, dem der von außen einwirkende Überdruck entgegensteht. Dadurch werden die Wandungsbereiche der Bauteilelemente auch in diesen Ecken des Querschnitts komprimiert, wodurch das Laminierergebnis verbessert wird.

Weitere bevorzugte und vorteilhafte Ausgestaltungsmerkmale des erfindungsgemäßen Verfahrens sind Gegenstand der Unteransprüche 2 bis 8.

Vorzugsweise ist die Druckkammer als Druckkammerofen ausgebildet und die Bauteilelemente werden nach dem Aufbringen oder während des Aufbringens des Unterdrucks auf das Innere der Umhüllung erwärmt. Durch die Erwärmung wird die Fertigung beschleunigt und ein höherer Festigkeitsgrad des gesamten Bauteils wird erzielt.

Vorzugsweise wird der Hohlkörper in der Vertiefung fixiert. Diese Fixierung erleichtert das Zusammenfügen der Bauteilelemente und gewährleistet eine präzisere Fertigung.

Gemäß der Erfindung, ist der Hohlkörper an seiner Außenseite an zumindest einem Ort mit einem eisenhaltigen Metallelement oder einem Magneten versehen und die Fixierung des Hohlkörpers in der Vertiefung erfolgt mittels zumindest eines auf der Außenseite des ersten Bauteilelements angebrachten Magneten beziehungsweise Metallelementes, der beziehungsweise das mit den Metallelementen beziehungsweise Magneten des Hohlkörpers zusammenwirken. Hierdurch wird der Hohlkörper in der später das Innere des Hohlprofils bildenden Vertiefung auf einfache Weise fixiert. Nach dem Fertigungsprozess kann diese Fixierung durch Entfernen der an der Außenseite vorgesehenen Magneten beziehungsweise Metallelemente gelöst werden, sodass der Hohlkörper dann aus dem Hohlprofil leicht herausgezogen werden kann.

Dabei wird es besonders bevorzugt, wenn der Hohlkörper an seiner Außenseite mit einem eisenhaltigen Metallband versehen ist. Dieses eisenhaltige Metallband kann bereits bei der Herstellung des Hohlkörpers, beispielsweise eines im Querschnitt speziell geformten Schlauches, an diesem angebracht werden.

Vorzugsweise ist der Hohlkörper schlauchartig ausgebildet. Der schlauchartige Hohlkörper kann dann an seinen Enden entweder bereits bei der Herstellung des Hohlkörpers oder vor dem Einlegen des Hohlkörpers in die Vertiefung beim Herstellungsprozess des Bauteils fluiddicht verschlossen werden.

Besonders bevorzugt ist eine Ausführungsform, bei der der Hohlkörper als Formteil mit zumindest abschnittsweise starren oder steifen Außenwänden ausgebildet ist. Diese Ausgestaltung des Hohlkörpers verleiht dem Hohlkörper bereits vor dem Einfüllen von Druckfluid eine definierte Querschnittskontur, sodass das korrekte Einlegen des Hohlkörpers in die Vertiefung erleichtert wird.

Das Verfahren ist besonders vorteilhaft durchführbar, wenn das erste Bauteilelement einen Längsspant oder einen Abschnitt eines Längsspants einer Rumpfkonstruktion, vorzugsweise eines Luftfahrzeugs, bildet und wenn das zweite Bauteilelement eine Rumpfhaut oder einen Abschnitt einer Rumpfhaut, vorzugsweise eines Luftfahrzeugs, bildet. Bei der Herstellung von Luftfahrzeugen oder Teilen von Luftfahrzeugen aus Verbundwerkstoffen ist eine hochfeste und hochpräzise Zusammenfügung von Bauteilelementen zu Bauteilen erforderlich, die mit dem erfindungsgemäßen Verfahren erreicht werden kann. Auch bei anderen Rumpfkonstruktionen von beispielsweise statischen Objekten oder anderen Fahrzeugen, wie beispielsweise Landfahrzeugen oder Wasserfahrzeugen, kann das erfindungsgemäße Verfahren vorteilhaft eingesetzt werden.

Der den Hohlkörper betreffende Teil der Aufgabe wird gelöst durch einen Hohlkörper mit den Merkmalen des Patentanspruchs 6.

Dieser erfindungsgemäße Hohlkörper als Formteil zur Durchführung eines erfindungsgemäßen Verfahrens ist fluiddicht ausgebildet, weist aber zumindest einen mit dem Inneren des Hohlkörpers in Fluidverbindung stehenden Fluidanschluss auf. Der Hohlkörper weist weiterhin zumindest abschnittsweise starre oder steife Außenwände auf. Die starren oder steifen Außenwände oder Außenwandabschnitt erleichtern, wie bereits ausgeführt worden ist, das korrekte Einlegen des Hohlkörpers in die Vertiefung des ersten Bauteilelements und der Fluidanschluss ermöglicht es, das Innere des Hohlkörpers entweder gesondert unter Druck zu setzen oder dem von außen auf die fluiddichte Umhüllung aufgebrachten Umgebungsdruck auszusetzen.

Vorzugsweise bildet der Querschnitt des Hohlkörpers die Grundform eines Dreiecks oder Trapezes mit abgerundeten Ecken oder die Form eines mit einer Basis versehenen, geschlossenen Omega. Es sind aber auch beliebige andere Querschnittsformen des Hohlkörpers realisierbar.

Gemäß der Erfindung, ist der Hohlkörper an seiner Außenseite an zumindest einem Ort mit einem eisenhaltigen Metallelement oder einem Magneten versehen. Diese Ausführungsform erleichtert die bereits in Verbindung mit dem erfindungsgemäßen Verfahren beschriebene Fixierung des Hohlkörpers in der Vertiefung mittels Magnetkräften und das anschließende problemlose Aufheben der den Hohlkörper im gebildeten Hohlprofil fixierenden Kräfte, damit der Hohlkörper ohne Schwierigkeiten aus dem Hohlprofil nach vollendeter Fertigung herausgezogen werden kann.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: ein erstes Ausführungsbeispiel der Anordnung zweier Bauteilelemente unter Einschluss eines erfindungsgemäßen Hohlkörpers in der Querschnittsansicht bei der Durchführung eines erfindungsgemäßen Verfahrens;
- Fig. 2: eine alternative Querschnittsdarstellung eines erfindungsgemäßen Hohlkörpers und
- Fig. 3: eine Darstellung zweier laminierter Bauteile mit einem eingeschlossenen Hohlkörper gemäß dem Stand der Technik.

### DARSTELLUNG VON BEVORZUGTEN AUSFÜHRUNGSBEISPIELEN

Fig. 1 zeigt die Anordnung von zwei Bauteilelementen 1, 2, wobei das erste Bauteilelement 1 mit einer Vertiefung 10 versehen ist. Die Vertiefung 10 weist einen trapezförmigen Querschnitt auf. Links und rechts neben der Vertiefung 10 besitzt das erste Bauteilelement 1 Fußabschnitte 12, 14, die sich parallel zum darunter liegenden zweiten Bauteil 2 erstrecken und mit diesem über ein - nicht gezeigtes - Haftmittel verbunden sind. Die Vertiefung 10 des ersten Bauteilelements 1 wird auf diese Weise an ihrer offenen Unterseite vom zweiten Bauteilelement 2 verschlossen, sodass das erste Bauteilelement 1 und das zweite Bauteilelement 2 an dieser Stelle ein Hohlprofil ausbilden.

Im Inneren der Vertiefung 10 ist ein Hohlkörper 3 angeordnet, der als vorgeformtes Formteil ausgebildet ist und dessen Querschnitt dem Querschnitt der Vertiefung 10 und damit dem gebildeten Hohlprofil im wesentlichen entspricht. Der Hohlkörper 3 besitzt somit ebenfalls einen trapezförmigen Querschnitt. Besitzt auch das zweite Bauteil an dieser Stelle eine Vertiefung, so kann der Querschnitt des Hohlkörpers so gewählt werden, dass er passend in beide Vertiefungen eingreift.

Im oberen Bereich des Hohlkörpers 3, also auf dessen vom zweiten Bauteilelement 2 abgewandten Seite, ist in den Hohlkörper 3 ein Metallband 4 eingearbeitet, das an der Innenseite eines Wandabschnitts 16 des ersten Bauteilelements 1 anliegt. Auf der anderen Seite dieses Wandabschnitts 16 ist ein Permanentmagnet 5 vorgesehen, der das Metallelement 4 gegen den Wandabschnitt 16 anzieht und somit den Hohlkörper 3 im Inneren der Vertiefung 10 positioniert und fixiert.

Eine fluiddichte Umhüllung 6 umgibt die beiden zusammengefügten Bauteilelemente 1 und 2. Die fluiddichte Umhüllung 6 ist mit einem Unterdruckanschluss 60 versehen, der in Fig. 1 schematisch dargestellt ist. Eine - nicht dargestellte - Unterdruckpumpe saugt die im Inneren der Umhüllung 6 befindliche Luft aus der Umhüllung heraus, wie durch den Pfeil V symbolisiert ist, sodass sich die Umhüllung an die Außenflächen des aus dem ersten Bauteilelement 1 und dem zweiten Bauteilelement 2 gebildeten Bauteils anlegt. Dabei werden eventuell vorhandene Luftblasen in der die Fußabschnitte 12, 14 des ersten Bauteilelements 1 mit dem zweiten Bauteilelement 2 verbindenden Haftmittelschicht gesaugt, sodass eine optimale flächige Verklebung der beiden Bauteilelemente miteinander in diesem Bereich zustande kommt. Der in der Umgebung der von der Umhüllung 6 umhüllten Bauteilelemente 1, 2 herrschende Umgebungsdruck P wirkt von außen auf die Umhüllung 6 und damit auf die frisch laminierten und noch nicht ausgehärteten Bauteilelemente 1 und 2 ein und presst diese zusammen. Der Unterdruck im Inneren der Umhüllung saugt dabei auch eventuell im Laminat enthaltene Lufteinschlüsse heraus.

Das Innere des Hohlkörpers 3 steht über einen die Wandung der Umhüllung 6 fluiddicht durchdringenden Druckfluidanschluss 30 in Fluidverbindung, sodass ein Druckausgleich zwischen dem Inneren des Hohlkörpers 3 und der äußeren Umgebung außerhalb der Umhüllung 6 stattfinden kann. Der Umgebungsdruck P herrscht in einem in Fig. 1 schematisch dargestellten Druckkammerofen 7, in welchen die beiden mit der Umhüllung 6 versehenen Bauteilelemente 1 und 2 platziert worden sind. Im Inneren des Hohlkörpers 3 herrscht somit ebenfalls der Umgebungsdruck P. Hierdurch wird verhindert, dass die das Hohlprofil bildenden Wandabschnitte des ersten Bauteilelements 1 und des zweiten Bauteilelements 2 aufgrund des Umgebungsdrucks P kollabieren.

Aufgrund der trapezförmigen Formteil-Ausgestaltung des Hohlkörpers 3 kann sich der gegenüber dem Unterdruck im Inneren der fluiddichten Umhüllung 6 unter Überdruck stehende Hohlkörper 3 unter minimaler Dehnung seiner entsprechenden Wandbereiche bis in die Ecken der Vertiefung 10 beziehungsweise des aus der Vertiefung 10 und dem zweiten Bauteilelement 2 gebildeten Hohlprofils erstrecken, sodass auch in diesen Eckbereichen der äußere Umgebungsdruck P auf die laminierten Wandbereiche sowohl des ersten Bauteilelements, als auch des zweiten Bauteilelements einwirken kann und diese Wandbereiche komprimiert. Dadurch wird eine Wellenbildung der einzelnen Laminatschichten in diesen Wandbereichen, wie sie im Stand der Technik auftreten kann, verhindert.

Fig. 2 stellt eine alternative Ausgestaltungsform eines erfindungsgemäßen Hohlkörpers 103 dar, der die Querschnittsform eines griechischen Buchstabens "Omega" mit geschlossener Basis aufweist. Dieses Ausführungsbeispiel soll verdeutlichen, dass eine Vielzahl von auch komplizierteren Querschnittsformen für das aus dem ersten Bauteilelement und dem zweiten Bauteilelement zu bildende Hohlprofil durch den erfindungsgemäß als Formteil ausgebildeten Hohlkörper realisierbar ist.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

### Es bezeichnen:

- 1: erstes Bauteilelement
- 2: zweites Bauteilelement
- 3, 103: Hohlkörper
- 4: Metallelement
- 5: Magnet
- 6: Umhüllung
- 7: Druckkammer
- 10: Vertiefung
- 12: Fußabschnitt
- 14: Fußabschnitt
- 16: Wandabschnitt
- 30: Druckfluidanschluss
- 60: Unterdruckanschluss
- 201: erstes Bauteilelement
- 201', 202": Bereich von 201
- 202: zweites Bauteilelement
- 202', 202": Bereich von 202
- 210: Vertiefung

## Patentansprüche

1. Verfahren zur Herstellung eines zumindest ein Hohlprofil aufweisenden Bauteils aus zumindest zwei laminierten Bauteilelementen mit den Schritten:
- Laminieren zumindest eines ersten (1) der beiden Bauteilelemente (1, 2) unter Ausformen von zumindest einer Vertiefung (10);
- Anordnen eines als Formteil ausgebildeten schlauchartigen Hohlkörpers (3) in der Vertiefung (10);
- Anbringen eines Haftmittels auf zumindest einem Oberflächenbereich des ersten Bauteilelementes (1) neben der Vertiefung (10);
- Platzieren des ersten Bauteilelements (1) zusammen mit dem Hohlkörper auf dem zweiten Bauteilelement (2) derart, dass die Vertiefung (10) zum zweiten Bauteitetement (2) weist und der mit dem Haftmittel versehene Oberflächenbereich mit dem zweiten Bauteilelement (2) in Kontakt gerät;
- Umhüllen der beiden Bauteilelemente (1, 2) mit einer unstarren, fluiddichten Umhüllung (6), wobei das Innere des Hohlkörpers (3) gegenüber dem Inneren der Umhüllung (6) abgedichtet ist;
- Platzieren der umhüllten Bauteilelemente (1, 2) in einer Druckkammer (7) und
- Aufbringen eines Unterdrucks auf das Innere der Umhüllung (6),
**dadurch gekennzeichnet, dass** das Innere des Hohlkörpers (3) mit der Umgebung außerhalb der Umhüllung (6) in Fluidverbindung steht und dass der Hohlkörper (3) in der Vertiefung (10) fixiert wird, wobei der Hohlkörper (3) an seiner Außenseite an zumindest einem Ort mit einem eisenhaltigen Metallelement (4) oder einem Magneten versehen ist und die Fixierung des Hohlkörpers (3) in der Vertiefung (10) mittels zumindest einem auf der Außenseite des ersten Bauteilelements (1) angebrachten Magneten (5) beziehungsweise Metallelements erfolgt, der beziehungsweise das mit dem Metallelement (4) beziehungsweise Magneten des Hohlkörpers (3) zusammenwirkt.

2. Verfahren nach Anspruch 1,
**dadurch gekennzeichnet,**
**dass** die Druckkammer (7) als Druckkammerofen ausgebildet ist und dass die Bauteilelemente (1, 2) nach dem Aufbringen oder während des Aufbringens des Unterdrucks auf das Innere der Umhüllung (6) erwärmt werden.

3. Verfahren nach Anspruch 2,
**dadurch gekennzeichnet,**
- **dass** der Hohlkörper (3) an seiner Außenseite mit einem eisenhaltigen Metallband (4) versehen ist.

4. Verfahren nach einem der vorhergehenden Ansprüche,
**dadurch gekennzeichnet,**
- **dass** der Hohlkörper (3) als Formteil mit zumindest abschnittsweise starren oder steifen Außenwänden ausgebildet ist.

5. Verfahren nach einem der vorhergehenden Ansprüche,
**dadurch gekennzeichnet,**
- **dass** das erste Bauteilelement (1) einen Längsspant oder einen Abschnitt eines Längsspants einer Rumpfkonstruktion, vorzugsweise eines Luftfahrtzeugs, bildet und
- **dass** das zweite Bauteilelement (2) eine Rumpfhaut oder einen Abschnitt einer Rumpfhaut, vorzugsweise eines Luftfahrtzeugs, bildet.

6. Hohlkörper als Formteil zur Durchführung eines Verfahrens nach einem der vorhergehenden Ansprüche, wobei der Hohlkörper fluiddicht ausgebildet ist, aber zumindest einen mit dem Inneren des Hohlkörpers in Fluidverbindung stehenden Fluidanschluss aufweist, und wobei der Hohlkörper (3, 103) zumindest abschnittsweise starre oder steife Außenwände aufweist,
**dadurch gekennzeichnet, dass** an der Außenseite des Hohlkörpers (3, 103) an zumindest einem Ort ein eisenhaltiges Metallelement (4) oder ein Magnet vorgesehen ist.

7. Hohlkörper nach Anspruch 6,
**dadurch gekennzeichnet,**
- **dass** der Querschnitt des Hohlkörpers (3, 103) die Form eines Dreiecks oder Trapezes mit abgerundeten Ecken oder die Form eines mit einer Basis versehenen, geschlossenen Omega bildet.

## Claims

1. Method for producing a component with at least one hollow profile from at least two laminated component elements, having the steps of:
- laminating at least a first (1) one of the two component elements (1, 2) by forming at least one depression (10);
- arranging in the depression (10) a hose-like hollow body (3) formed as a moulded part;
- applying an adhesive to at least one surface region of the first component element (1) next to the depression (10);
- placing the first component element (1) together with the hollow body on the second component element (2) such that the depression (10) faces towards the second component element (2) and the surface region provided with the adhesive comes into contact with the second component element (2);
- enveloping the two component elements (1, 2) with a flexible, fluid-tight envelopment (6), wherein the inside of the hollow body (3) is sealed with respect to the inside of the envelopment (6);
- placing the enveloped component elements (1, 2) into a pressure chamber (7) and
- applying a vacuum to the inside of the envelopment (6),
**characterized in that** the inside of the hollow body (3) is fluidically connected to the surroundings outside the envelopment (6) and **in that** the hollow body (3) is secured in the depression (10), wherein the hollow body (3) is provided, at at least one location on its outer side, with a ferrous metallic element (4) or a magnet and the hollow body (3) is secured in the depression (10) by means of at least one magnet (5) or metallic element which is attached to the outer side of the first component element (1) and which interacts with the metallic element (4) or, respectively, the magnet of the hollow body (3).

2. Method according to Claim 1,
**characterized in that**
the pressure chamber (7) is configured as an autoclave and **in that** the component elements (1, 2) are heated after or during application of the vacuum to the inside of the envelopment (6).

3. Method according to Claim 2,
**characterized in that**
- the hollow body (3) is provided, on its outer side, with a ferrous metal band (4).

4. Method according to one of the preceding claims,
**characterized in that**
- the hollow body (3) is formed as a moulded part having, at least in sections, rigid or stiff outer walls.

5. Method according to one of the preceding claims,
**characterized in that**
- the first component element (1) forms a longitudinal frame or a section of a longitudinal frame of a fuselage construction, preferably of an aircraft, and
- the second component element (2) forms a fuselage skin or a section of a fuselage skin, preferably of an aircraft.

6. Hollow body as a moulded part for carrying out a method according to one of the preceding claims, wherein the hollow body is of fluid-tight design, but has at least one fluidic connection fluidically connected to the inside of the hollow body, and wherein the hollow body (3, 103) has, at least in sections, rigid or stiff outer walls,
**characterized in that** a ferrous metallic element (4) or a magnet is provided at at least one location on the outer side of the hollow body (3, 103).

7. Hollow body according to Claim 6,
**characterized in that**
- the cross section of the hollow body (3, 103) is in the shape of a triangle or a trapezium with rounded corners, or in the shape of a closed omega having a base.

## Revendications

1. Procédé de fabrication d'un composant présentant au moins un profilé creux constitué d'au moins deux éléments de composant laminés, comprenant les étapes suivantes :
- laminage d'au moins un premier (1) des deux éléments de composant (1, 2), en formant au moins un renfoncement (10) ;
- agencement d'un corps creux (3) de forme tubulaire réalisé sous forme de pièce formée, dans le renfoncement (10) ;
- application d'un promoteur d'adhésion sur au moins une région de surface du premier élément de composant (1) à côté du renfoncement (10) ;
- positionnement du premier élément de composant (1) conjointement avec le corps creux sur le deuxième élément de composant (2), de telle sorte que le renfoncement (10) soit tourné vers le deuxième élément de composant (2) et que la région de surface pourvue du promoteur d'adhésion vienne en contact avec le deuxième élément de composant (2) ;
- enveloppement des deux éléments de composant (1, 2) avec une enveloppe non rigide, étanche aux fluides (6), l'intérieur du corps creux (3) étant étanchéifié par rapport à l'intérieur de l'enveloppe (6) ;
- positionnement des éléments de composant enveloppés (1, 2) dans une chambre de pression (7) et
- application d'une dépression à l'intérieur de l'enveloppe (6),
**caractérisé en ce que** l'intérieur du corps creux (3) est en liaison fluidique avec l'environnement à l'extérieur de l'enveloppe (6) et **en ce que** le corps creux (3) est fixé dans le renfoncement (10), le corps creux (3) étant muni, au niveau de son côté extérieur, à au moins un endroit, d'un élément métallique contenant du fer (4) ou d'un aimant et la fixation du corps creux (3) dans le renfoncement (10) s'effectuant au moyen d'au moins un aimant (5) ou d'un élément métallique monté sur le côté extérieur du premier élément de composant (1), lequel aimant ou élément métallique coopère avec l'élément métallique (4) ou avec l'aimant du corps creux (3).

2. Procédé selon la revendication 1,
**caractérisé en ce que**
la chambre de pression (7) est réalisée sous forme de four à chambre de pression et **en ce que** les éléments de composant (1, 2), après l'application ou pendant l'application de la dépression à l'intérieur de l'enveloppe (6), sont chauffés.

3. Procédé selon la revendication 2,
**caractérisé en ce que**
le corps creux (3) est muni, sur son côté extérieur, d'une bande métallique contenant du fer (4).

4. Procédé selon l'une quelconque des revendications précédentes,
**caractérisé en ce que**
le corps creux (3) est réalisé sous forme de pièce formée avec des parois extérieures au moins partiellement rigides ou raides.

5. Procédé selon l'une quelconque des revendications précédentes,
**caractérisé en ce que**
- le premier élément de composant (1) forme une lisse ou une portion d'une lisse d'une construction de fuselage, de préférence d'un aéronef, et
- **en ce que** le deuxième élément de composant (2) forme une peau de fuselage ou une portion d'une peau de fuselage, de préférence d'un aéronef.

6. Corps creux réalisé sous forme de pièces formées pour mettre en oeuvre un procédé selon l'une quelconque des revendications précédentes, le corps creux étant réalisé de manière étanche aux fluides, mais présentant au moins un raccord fluidique en liaison fluidique avec l'intérieur du corps creux, le corps creux (3, 103) présentant des parois extérieures au moins partiellement rigides ou raides,
**caractérisé en ce qu'**au niveau du côté extérieur du corps creux (3, 103) à au moins un endroit, est prévu un élément métallique contenant du fer (4) ou un aimant.

7. Corps creux selon la revendication 6,
**caractérisé en ce que**
la section transversale du corps creux (3, 103) présente la forme d'un triangle ou d'un trapèze avec des coins arrondis ou la forme d'un oméga fermé avec une base.
